# EUROPÄISCHE PATENTSCHRIFT

(11) **EP 2 818 661 B1**
(45) Veröffentlichungstag und Bekanntmachung des Hinweises auf die Patenterteilung: **19.07.2017**
(21) Anmeldenummer: 14168425.8
(22) Anmeldetag: 15.05.2014
(51) Int. Cl.: F01N 13/10, F01N 13/14, F02B 37/02, F02B 67/10, F01N 13/16, F01N 13/18

(54) **Luftspaltisolierter Abgaskrümmer**
Air gap insulated exhaust manifold
Collecteur de gaz d'échappement isolé par interstice d'air

(30) Priorität: 18.06.2013 DE 102013211390
(43) Veröffentlichungstag der Anmeldung: 31.12.2014
(73) Patentinhaber: Eberspächer Exhaust Technology GmbH & Co. KG, 66539 Neunkirchen (DE)
(72) Erfinder: Wagner, Andreas, 73061 Ebersbach (DE); Wirth, Georg, 73230 Kirchheim/Teck (DE); Mohr, Ralf, 69118 Heidelberg (DE); Jambrosic, Kresimir, 70327 Stuttgart (DE); Häberle, Jürgen, 70372 Stuttgart Bad Canstatt (DE)
(74) Vertreter: BRP Renaud & Partner mbB Rechtsanwälte Patentanwälte Steuerberater

(56) Entgegenhaltungen:
- EP-A1- 1 734 235
- EP-A1- 2 075 430
- DE-A1-102007 061 219
- JP-U- S6 174 623

## Beschreibung

Die vorliegende Erfindung betrifft einen luftspaltisolierten Abgaskrümmer für eine aufgeladene Brennkraftmaschine, vorzugsweise eines Kraftfahrzeugs. Die Erfindung betrifft außerdem eine mit einem derartigen Abgaskrümmer ausgestattete Abgasanlage für eine Brennkraftmaschine, vorzugsweise eines Kraftfahrzeugs.

Ein Abgaskrümmer dient als Einlassbereich einer Abgasanlage und führt hierbei die üblicherweise von mehreren Brennräumen der Brennkraftmaschine kommenden separaten Abgasströme zusammen. Hierzu umfasst ein Abgaskrümmer üblicherweise einen Motorflansch, mit dem der Abgaskrümmer an einem Motorblock der Brennkraftmaschine befestigt werden kann. Im Bereich des Motorflansches sind dann separate Eintrittsöffnungen vorgesehen, die den einzelnen Brennräumen der Brennkraftmaschine zugeordnet sind. Bei einer aufgeladenen Brennkraftmaschine ist der Abgaskrümmer üblicherweise austrittsseitig mit einem Turbinenflansch mit einer Turbine eines Abgasturboladers fest verbunden, um die von der Brennkraftmaschine kommenden Abgase möglich motornah der Turbine zuzuführen. Bei Brennkraftmaschinen, die zwei Zylinderbänke oder zwei Zylindergruppen aufweisen, können zweiflutige Turbinen zum Einsatz kommen, sogenannten Twin-Scroll-Turbinen. Um gegenseitige Wechselwirkungen der beiden Zylindergruppen zu vermeiden, erfolgt die Abgasführung bis zur zweiflutigen Turbine ebenfalls zweiflutig, so dass der Abgaskrümmer für die beiden Zylindergruppen separate Sammelrohre aufweist, die jeweils von mehreren Einlassöffnungen zu einer Auslassöffnung führen, wobei dann im Turbinenflansch die beiden Auslassöffnungen der separaten Sammelrohre die getrennten Abgasströme separaten Einlassöffnungen der Turbine zuführen.

Zur verbesserten thermischen Isolation ist es ferner bekannt, einen derartigen Abgaskrümmer mit einer Luftspaltisolierung auszustatten. Dies wird dadurch erreicht, dass ein abgasführendes Innenrohr von einem Außenrohr unter Ausbildung eines Abstands umhüllt wird, wobei dieser Abstand zwischen Innenrohr und Außenrohr die gewünschte Luftspaltisolierung bildet. Außenrohr und Innenrohr können auch als Außenschale bzw. Innenschale bezeichnet werden.

Für eine aufgeladene Brennkraftmaschine mit Twin-Scroll-Turbine umfasst ein luftspaltisolierter Abgaskrümmer somit einen Motorflansch zum Befestigen des Abgaskrümmers am Motorblock der Brennkraftmaschine, einen Turbinenflansch zum Befestigen des Abgaskrümmers an der Turbine des Abgasturboladers, zwei separate Innenrohre, die jeweils von wenigstens einer im Bereich des Motorflansches angeordneten Eintrittsöffnung für Abgas zu einer im Bereich des Turbinenflansches angeordneten Austrittsöffnung für Abgas führen, sowie ein Außenrohr, das die beiden Innenrohre unter Ausbildung einer Luftspaltisolierung umhüllt und sich im Wesentlichen vom Motorflansch bis zum Turbinenflansch erstreckt. EP 2 075 430 A1 offenbart einen doppelwandigen luftspaltisolierten Abgaskrümmer mit Trennwand. Die Innenrohre können mehrteilig konzipiert sein, um mehrere Eintrittsöffnungen einfacher zu einer gemeinsamen Austrittsöffnung zusammenführen zu können. Die einzelnen Glieder des jeweiligen Innenrohrs können dabei ineinander gesteckt sein, um thermisch bedingte Relativbewegungen zu ermöglichen. Aufgrund dieser Steckverbindungen kann es zu Leckagen kommen, wodurch Abgas aus dem jeweiligen Innenrohr austreten und in ein vom Außenrohr umhülltes Inneres des Außenrohrs eintreten kann. Derartige tolerierbare Leckagen treten entsprechend dem Arbeitsrhythmus der Brennkraftmaschine gepulst auf. Damit sich diese Druckpulsationen der beiden Zylindergruppen innerhalb des Abgaskrümmers nicht gegenseitig beeinflussen, kann im Außenrohr eine Trennwand angeordnet sein, die das Innere des Außenrohrs in zwei Innenräume unterteilt, in denen jeweils eines der beiden Innenrohre angeordnet ist. Diese Trennwand erstreckt sich dabei zweckmäßig vom Turbinenflansch bis zum Motorflansch.

Es hat sich gezeigt, dass eine derartige Trennwand aufgrund ihrer Positionierung zwischen den beiden Innenrohren sehr hohen thermischen Belastungen ausgesetzt ist. Insbesondere ist die Trennwand starken thermischen Dehnungseffekten ausgesetzt. Hierdurch kann es zu einem unerwünschten Verschleiß kommen. Die vorliegende Erfindung beschäftigt sich mit dem Problem, für einen Abgaskrümmer der eingangs genannten Art bzw. für eine damit ausgestattete Abgasanlage eine verbesserte Ausführungsform anzugeben, die sich insbesondere durch einen reduzierten Verschleiß auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Trennwand als separates Bauteil auszuführen und zumindest bezüglich des Turbinenflansches beweglich, also lose anzuordnen. Durch diese Bauweise kann sich die Trennwand relativ zum Turbinenflansch bewegen, zumindest im Bereich einer dem Turbinenflansch zugewandten Stirnseite. In der Folge kann sich die Trennwand aufgrund thermischer Belastung ausdehnen und dabei relativ zum Turbinenflansch verstellen, ohne dass dabei eine Gefahr übermäßigen Verschleißes auftritt. Des Weiteren kann durch die lose Anordnung der Trennwand bezüglich des Turbinenflansches die Gefahr einer mechanischen Beschädigung des Turbinenflansches durch die sich gegebenenfalls daran abstützende Trennwand reduziert werden. Erfindungsgemäß ist die Trennwand am Turbinenflansch durch Führungskonturen formschlüssig geführt. Hierdurch wird für die Bewegungen der Trennwand relativ zum Turbinenflansch eine Führung definiert, was diese Relativbewegungen vereinfacht und die Gefahr von Verschleiß reduziert. Eine formschlüssige Führung lässt sich dabei besonders einfach ohne zusätzliche Bauteile realisieren, da die Führung der Trennwand unmittelbar am Turbinenflansch erfolgt, sofern die Führungskonturen integral am Turbinenflansch ausgeformt sind.

Gemäß einer bevorzugten Weiterbildung kann die jeweilige Führungskontur durch eine im Turbinenflansch ausgebildete Führungsaufnahme gebildet sein, in die ein seitlicher Randbereich der Trennwand formschlüssig eingreift. Eine derartige Führungsaufnahme lässt sich besonders einfach am Turbinenflansch als integralen Bestandteil ausformen. Im Bereich einer dem Turbinenflansch zugewandten Stirnseite kann die Trennwand einfach mit voneinander abgewandten seitlichen Randbereichen in die diametral gegenüberliegenden Führungsaufnahmen eingreifen, wodurch eine sichere Führung für die Trennwand realisiert ist.

Bei einer weiteren Ausführungsform kann die Trennwand auch am Außenrohr lose angeordnet sein. Das bedeutet, dass die Trennwand auch gegenüber dem Außenrohr beweglich angeordnet ist, sich also insbesondere ohne mit dem Au-βenrohr zu verblocken thermisch ausdehnen kann.

Gemäß einer bevorzugten Weiterbildung kann die Trennwand am Außenrohr in Positionierkonturen formschlüssig positioniert sein. Derartige Positionierkonturen lassen sich besonders einfach in das Außenrohr integrieren. Beispielsweise kann das Außenrohr in Schalenbauweise hergestellt sein, wobei die einzelnen Schalen mittels Tiefziehtechnik oder Blasformtechnik hergestellt werden können. Hierbei lassen sich derartige Positionierkonturen besonders einfach, ohne zusätzlichen Aufwand integral am Außenrohr ausformen.

Gemäß einer bevorzugten Weiterbildung kann die Positionierkontur durch eine im Außenrohr ausgebildete Positionieraufnahme gebildet sein, in die ein seitlicher Randbereich der Trennwand formschlüssig eingreift. Auch hier wird über die jeweilige Formschlussverbindung eine dauerhafte Positionierung erreicht, ohne dass zusätzliche Befestigungsmaßnahmen erforderlich sind.

Die jeweilige Positionierkontur kann sich grundsätzlich am Außenrohr vom Motorflansch bis zum Turbinenflansch erstrecken. Bevorzugt ist jedoch eine Ausführungsform, bei welcher sich die jeweilige Positionierkontur beabstandet vom Motorflansch und beabstandet vom Turbinenflansch befindet. In der Folge erstreckt sich die Positionierkontur nur über einen Teil des jeweiligen Seitenrands der Trennwand. Beispielsweise erstreckt sich die jeweilige Positionierkontur nur über maximal 50 % des jeweiligen Seitenrands der Trennwand. Bevorzugt erstreckt sich die jeweilige Positionierkontur über etwa 25 % des jeweiligen Seitenrands. Sofern sich die Positionierkontur nicht über den gesamten jeweiligen Seitenrand der Trennwand erstreckt, ist der mit der Positionierkontur zusammenwirkende, also darin eingreifende Randbereich der Trennwand zweckmäßig durch einen vom übrigen Seitenrand vorstehenden Vorsprung gebildet, der dann in die jeweilige Positionieraufnahme eingreift.

Bei einer anderen Ausführungsform kann die Trennwand auch am Motorflansch lose angeordnet sein. Mit anderen Worten, die Trennwand kann sich auch relativ zum Motorflansch bewegen, wodurch auch hier thermisch bedingte Bewegungen möglich sind und thermisch bedingte Spannungen reduziert werden können.

Gemäß einer vorteilhaften Weiterbildung kann die Trennwand am Motorflansch in wenigstens einer Haltekontur formschlüssig gehalten sein. Auch hier wird durch die Verwendung einer Formschlussverbindung auf separate Haltemittel verzichtet, wodurch die Haltekontur besonders einfach realisiert werden kann.

Gemäß einer vorteilhaften Weiterbildung kann die jeweilige Haltekontur durch eine im Motorflansch ausgebildete Halteaufnahme gebildet sein, in die ein stirnseitiger Randbereich der Trennwand formschlüssig eingreift. Eine derartige Halteaufnahme lässt sich besonders einfach integral am Motorflansch herstellen, beispielsweise durch Berücksichtigung in einem Spritzgusswerkzeug, das zum Herstellen des Motorflansches dient.

Bei einer anderen vorteilhaften Ausführungsform kann der Turbinenflansch offen konzipiert sein. Das bedeutet, dass innerhalb des Turbinenflansches eine offene Verbindung zur Luftspaltisolierung, also zum Zwischenraum zwischen den Innenrohren und dem Außenrohr vorhanden ist. Hierdurch ergibt sich für den Turbinenflansch eine erheblich vereinfachte Bauform. Insbesondere kann auf einen Mittelsteg verzichtet werden, der sich zwischen den beiden Innenrohren, jeweils im Bereich der jeweiligen Austrittsöffnung erstreckt. Bei fehlendem Mittelsteg kann außerdem effizient die Gefahr einer Kollision der Trennwand mit dem Mittelsteg vermieden werden.

Zweckmäßig kann der Turbinenflansch eine einzige Flanschöffnung aufweisen, welche die beiden Innenrohre im Bereich der jeweiligen Austrittsöffnung umschließt und in der die Trennwand stirnseitig freistehend endet. Durch die freistehend endende Trennwand kann sich die Trennwand quasi beliebig innerhalb der Flanschöffnung in Richtung Turbine bewegen, ohne mit einem Hindernis zu kollidieren. Auf diese Weise lässt sich ein Verschleiß der Trennwand und des Turbinenflansches reduzieren.

Bei einer anderen Ausführungsform kann der Turbinenflansch geschlossen konzipiert sein. Das bedeutet, dass im Turbinenflansch auch die Luftspaltisolierung verschlossen ist. Hierdurch lassen sich auch im Bereich des Turbinenflansches Leckagen vermeiden, die zu einer unerwünschten Wechselwirkung zwischen den beiden durch die Trennwand voneinander separierten Innenräume führen könnten.

Zweckmäßig kann der Turbinenflansch zwei separate Flanschöffnungen aufweisen, die jeweils eines der Innenrohre im Bereich der jeweiligen Austrittsöffnung umschließen. Somit ist jedes Innenrohr für sich eingefasst, und zwar bevorzugt weitgehend dicht, beispielsweise nach Art einer Steckverbindung mit Schiebesitz. Die Trennwand kann nun an einem Abstützbereich des Turbinenflansches stirnseitig abgestützt sein. Durch die stirnseitige Abstützung der Trennwand am Turbinenflansch kann auch in diesem Bereich eine effiziente Abdichtung zwischen den beiden Innenräumen realisiert werden. Der Abstützbereich ist dabei an einem Mittelsteg des Turbinenflansches ausgebildet, der die beiden Flanschöffnungen voneinander trennt und der sich somit zwischen den beiden Innenrohren hindurcherstreckt.

Entsprechend einer vorteilhaften Weiterbildung kann der Abstützbereich wenigstens ein elastisches Abstützelement aufweisen, über das die Trennwand stirnseitig am Turbinenflansch abgestützt ist. Ein derartiges elastisches Abstützelement ermöglicht somit Relativbewegungen zwischen der Trennwand und dem zuvor genannten Mittelsteg des Turbinenflansches, ohne dass dabei eine übermäßige mechanische Belastung entsteht. Ein derartiges elastisches Abstützelement kann beispielsweise durch ein Drahtgestrickelement gebildet sein. Derartige Drahtgestrickelemente zeichnen sich durch eine hohe thermische Belastbarkeit sowie eine hohe Elastizität aus.

Die Trennwand kann bezüglich der beiden Innenrohre freistehend oder kontaktlos, also ohne Kontakt angeordnet sein. Auch diese Maßnahme reduziert die Gefahr von Verschleiß.

Ferner kann die Trennwand bevorzugt eben ausgestaltet sein, so dass sie sich in einer Trennwandebene erstreckt. Hierdurch wird die Trennwand besonders preiswert herstellbar. Beispielsweise kann die Trennwand durch einen Blechkörper gebildet sein, der sich besonders einfach zum Beispiel mittels eines Stanzvorgangs herstellen lässt. Bei einer ebenen Trennwand kann die Trennwand bevorzugt parallel zur Trennwandebene in die jeweilige Führungsaufnahme eingreifen. Ferner kann die Trennwand parallel zur Trennwandebene in die jeweilige Positionieraufnahme eingreifen. Schließlich kann die Trennwand parallel zur Trennwandebene in die jeweilige Halteaufnahme eingreifen. Des Weiteren kann vorgesehen sein, dass die Trennwand in der jeweiligen Führungsaufnahme parallel zur Trennwandebene beweglich angeordnet ist, wobei die Bewegungsrichtung parallel zu einer Abstandsrichtung zwischen Motorflansch und Turbinenflansch orientiert ist. Des Weiteren kann die Trennwand in der jeweiligen Positionieraufnahme parallel zur Trennwandebene beweglich angeordnet sein, wobei hier die Bewegungsrichtung quer zur Abstandsrichtung zwischen Motorflansch und Turbinenflansch orientiert ist. Schließlich kann die Trennwand in der jeweiligen Halteaufnahme parallel zur Trennwandebene beweglich angeordnet sein. In diesem Fall ist die Bewegungsrichtung wieder parallel zur Abstandsrichtung zwischen Motorflansch und Turbinenflansch orientiert.

Alternativ ist es ebenso möglich, die Trennwand uneben auszugestalten und sie beispielsweise mit einer Krümmung oder Bombierung zu versehen. Eine derartige Krümmung kann beim Aufheizen und beim Abkühlen ungewollte Verformungen vermeiden helfen. Auch eine solche unebene Trennwand kann im Bereich der jeweiligen Führungskontur eben oder geradlinig ausgestaltet sein, um eine lineare Führung zu bewirken. Entsprechendes gilt auch für den Bereich der jeweiligen Positionierkontur und/oder der Haltekontur.

Gemäß einer weiteren Alternativen ist es ebenso möglich, die Trennwand im Bereich der jeweiligen Positionierkontur mit einem abgewinkelten Bord auszustatten. Die jeweilige Positionierkontur ist dann zur Aufnahme des Bords ausgestaltet. Ferner ist es grundsätzlich möglich, die jeweilige Positionierkontur mit einer Aufnahmekontur auszustatten, die eine formschlüssige Verbindung mit dem jeweiligen Bord ermöglicht.

Bei einer weiteren Ausführungsform können zwei Positionierkonturen vorgesehen sein, die sich am Außenrohr diametral gegenüberliegen. Des Weiteren können die beiden Positionierkonturen zweckmäßig etwa mittig zwischen dem Motorflansch und dem Turbinenflansch angeordnet sein. Besonders vorteilhaft ist nun eine Weiterbildung, bei welcher die Positionierkonturen für parallel zur Abstandsrichtung zwischen Motorflansch und Turbinenflansch orientierte Dehnungsbewegungen der Trennwand als Festlager dienen, während die Führungskonturen und die wenigstens eine Haltekontur jeweils als Loslager dienen, in denen die Relativbewegungen zwischen der Trennwand und dem Turbinenflansch einerseits sowie zwischen der Trennwand und dem Motorflansch andererseits stattfinden.

Des Weiteren kann vorgesehen sein, dass sich die Trennwand, die bevorzugt eben ausgestaltet ist, im Wesentlichen senkrecht zu einer Flanschebene des Turbinenflansches erstreckt. Hierdurch wird für die thermischen Dehnungseffekte eine einfache Kinematik erreicht, wodurch insbesondere Verspannungen und dergleichen vermieden werden können.

Eine erfindungsgemäße Abgasanlage, die für eine aufgeladene Brennkraftmaschine, insbesondere in einem Kraftfahrzeug, vorgesehen ist, umfasst eine Turbine eines Abgasturboladers sowie einen Abgaskrümmer der vorstehend beschriebenen Art, über den die Abgasanlage an der Brennkraftmaschine befestigt werden kann. Hierzu wird der Motorflansch am Motorblock der Brennkraftmaschine fixiert, während der Turbinenflansch an der Turbine des Abgasturboladers fixiert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie in den beigefügten Ansprüchen definiert. Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Brennkraftmaschine mit einer Abgasanlage, die einen geschnitten dargestellten Abgaskrümmer aufweist,
- Fig. 2: eine Axialansicht des Abgaskrümmers im Bereich eines Turbinenflansches,
- Fig. 3: ein Axialschnitt des Abgaskrümmers durch den Turbinenflansch,
- Fig. 4: eine Axialansicht des Abgaskrümmers im Bereich des Turbinenflansches, bei einer anderen Ausführungsform,
- Fig. 5: ein Axialschnitt des Abgaskrümmers durch den Turbinenflansch, bei der in Fig. 4 gezeigten Ausführungsform,
- Fig. 6: ein Längsschnitt des Abgaskrümmers im Bereich des Turbinenflansches.

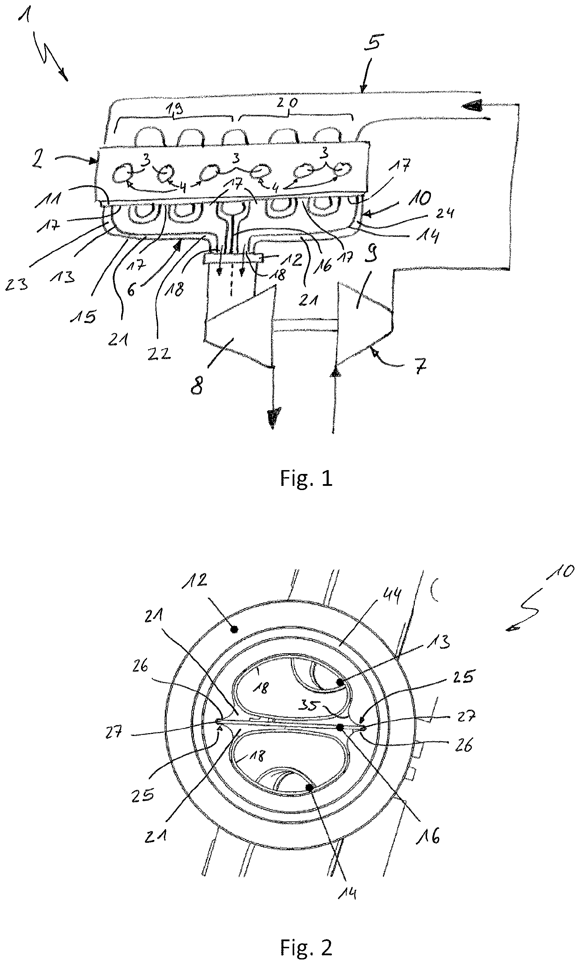

Entsprechend Figur 1 umfasst eine Brennkraftmaschine 1 einen Motorblock 2 mit mehreren Brennräumen 3, die jeweils in üblicher Weise durch einen Zylinder 4 gebildet sind, in dem jeweils ein hier nicht dargestellter Kolben hubverstellbar angeordnet ist. Die Brennkraftmaschine 1 weist eine Frischluftanlage 5 zur Versorgung der Brennräume 3 mit Frischluft auf. Ferner ist eine Abgasanlage 6 vorgesehen, die im Betrieb der Brennkraftmaschine 1 Abgas von den Brennräumen 3 abführt. Die Brennkraftmaschine 1 ist als aufgeladene Brennkraftmaschine 1 ausgestaltet. Dementsprechend ist sie hier mit einem Abgasturbolader 7 ausgestattet, der in üblicher Weise eine Turbine 8 und einen Verdichter 9 aufweist. Der Verdichter 9 ist in die Frischluftanlage 5 eingebunden und mit der Turbine 8 antriebsverbunden, die in die Abgasanlage 6 eingebunden ist. Die Abgasanlage 6 weist einen Abgaskrümmer 10 auf, der den Motorblock 2 mit der Turbine 8 verbindet.

Entsprechend den Figuren 1 bis 6 weist der Abgaskrümmer 10 einen Motorflansch 11 auf, der zum Befestigen des Abgaskrümmers 10 am Motorblock 2 dient. Der Abgaskrümmer 10 weist außerdem einen Turbinenflansch 12 auf, der zum Befestigen des Abgaskrümmers 10 an der Turbine 8 dient. Ferner umfasst der Abgaskrümmer 10 zwei separate Innenrohre 13, 14, ein Außenrohr 15 sowie eine Trennwand 16. Das jeweilige Innenrohr 13, 14 führt von mindestens einer im Bereich des Motorflansches 11 angeordneten Eintrittsöffnung 17 zu einer im Bereich des Turbinenflansches 12 angeordneten Austrittsöffnung 18. Im Beispiel der Figur 1 besitzt der Motorblock 2 sechs Zylinder 4, die in zwei Zylindergruppen 19, 20 zusammengefasst sind, so dass jede Zylindergruppe 19, 20 jeweils genau drei Zylinder 4 aufweist. Die beiden Innenrohre 13, 14 sind diesen beiden Zylindergruppen 19, 20 separat zugeordnet. Dementsprechend besitzt jedes Innenrohr 13 drei Eintrittsöffnungen 17 und eine Austrittsöffnung 18. In der Folge sind am Turbinenflansch 12 zwei derartige Austrittsöffnungen 18 zusammengeführt. Die Turbine 8 ist bevorzugt als Twin-Scroll-Turbine ausgestaltet, also als zweiflutige Turbine 8, so dass die beiden Austrittsöffnungen 18 des Abgaskrümmers 10 in der Turbine 8 in separaten Abgaspfaden geführt werden. Die beiden Innerohre 13, 14 können auch als Innenschalen 13, 14 bezeichnet werden.

Das Außenrohr 15, das auch als Außenschale 15 bezeichnet werden kann, umhüllt die beiden Innenrohre 13, 14, derart, dass sich dabei eine Luftspaltisolierung 21 ausbildet. Das Außenrohr 15 erstreckt sich dabei im Wesentlichen vom Motorflansch 11 bis zum Turbinenflansch 12. In den gezeigten Beispielen ist das Au-βenrohr 15 mit dem Motorflansch 11 und mit dem Turbinenflansch 12 direkt fest verbunden. Ebenso ist denkbar, das Außenrohr 15 indirekt am Motorflansch 11 und/oder am Turbinenflansch 12 zu befestigen, nämlich über das jeweilige Innenrohr 13, 14, das zumindest dann fest mit dem Motorflansch 11 bzw. mit dem Turbinenflansch 12 verbunden ist.

Die Trennwand 16 bildet bezüglich der Innenrohre 13, 14, des Außenrohrs 15, des Motorflansches 11 und des Turbinenflansches 12 ein separates Bauteil. Die Trennwand 16 ist in einem Inneren 22 des Außenrohrs 15 angeordnet, derart, dass sie im Inneren 22 zwei Innenräume 23, 24 voneinander trennt. Dabei ist in jedem Innenraum 23, 24 jeweils eines der beiden Innenrohre 13, 14 angeordnet. Entsprechend den Figuren 2 bis 6 ist die Trennwand 16 am Turbinenflansch 12 lose angeordnet, also nicht daran unmittelbar fixiert, so dass die Trennwand 16 relativ zum Turbinenflansch 12 beweglich ist. Gemäß den Figuren 2, 3 und 5 sind am Turbinenflansch 12 Führungskonturen 25 ausgebildet, welche die Trennwand 16 formschlüssig führen. Die jeweilige Führungskontur 25 ist dabei durch eine Führungsaufnahme 26 gebildet, die unmittelbar im Turbinenflansch 12 ausgebildet ist und in die ein seitlicher Randbereich 27 der Trennwand 16 formschlüssig eingreift.

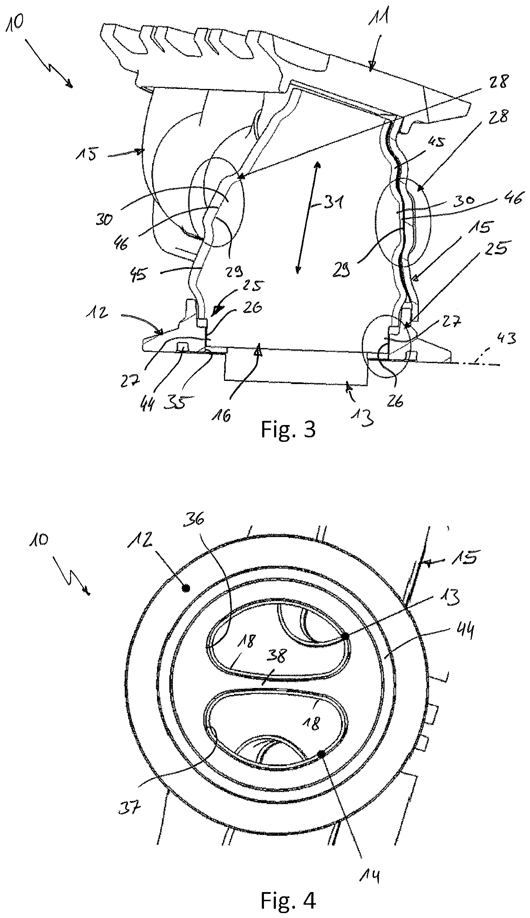

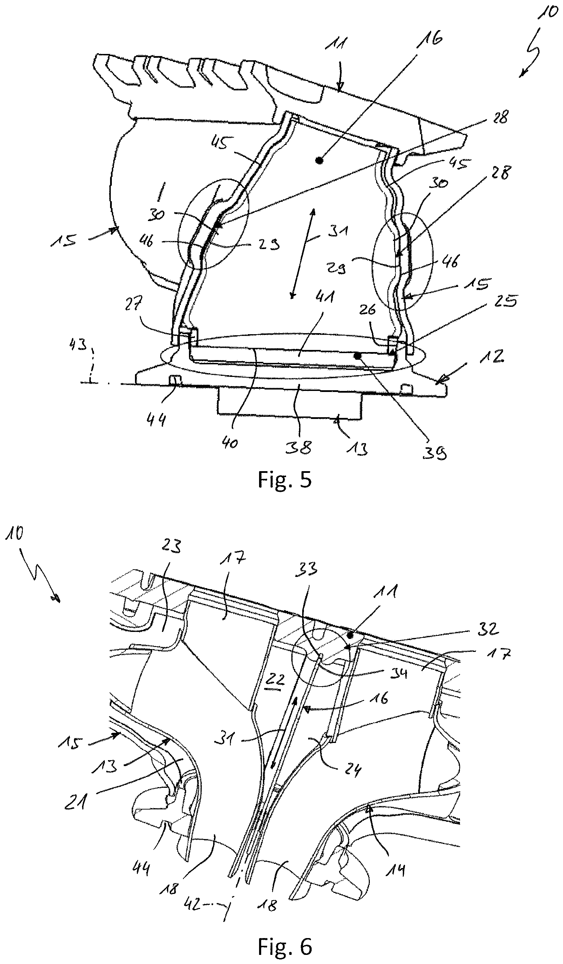

Die Trennwand 16 kann außerdem am Außenrohr 15 lose angeordnet sein. Gemäß den Figuren 3 und 5 kann das Außenrohr 15 hierzu zwei Positionierkonturen 28 aufweisen, die eine formschlüssige Positionierung der Trennwand 16 bewirken. Die jeweilige Positionierkontur 28 ist dabei durch eine Positionieraufnahme 29 gebildet, die im Außenrohr 15 ausgeformt ist und in die ein seitlicher Randbereich 30 der Trennwand 16 eingreift. Im Beispiel sind die Positionierkonturen 28 einander diametral gegenüberliegend angeordnet. Ferner sind die beiden Positionierkonturen 28 jeweils etwa mittig zwischen dem Motorflansch 11 und dem Turbinenflansch 12 angeordnet. Die Positionierkonturen 28 sind so ausgestaltet, dass sie Trennwand 16 bezüglich einer Abstandsrichtung 31 zwischen dem Motorflansch 11 und dem Turbinenflansch 12 relativ zum Außenrohr 15 fixiert ist, während die Trennwand 16 quer zur Abstandsrichtung 31 in den Positionierkonturen 28 beweglich angeordnet ist. Die Positionierkonturen 28 bilden hier Festlager, so dass sich die Trennwand 16 von den Positionierkonturen 28 ausgehend thermisch ausdehnen kann.

Gemäß den Figuren 3, 5 und 6 ist die Trennwand 16 zweckmäßig auch am Motorflansch 11 lose angeordnet, also nicht unmittelbar daran fixiert. Hierzu kann der Motorflansch 11 gemäß Figur 6 zumindest eine Haltekontur 32 aufweisen, die ein formschlüssiges Halten der Trennwand 16 bewirkt. Im Beispiel ist die jeweilige Haltekontur 32 durch eine Halteaufnahme 33 gebildet, die unmittelbar am Motorflansch 11 ausgeformt ist und in die ein stirnseitiger Randbereich 34 der Trennwand 16 formschlüssig eingreift.

Wie sich insbesondere Figur 6 entnehmen lässt, sind die Innenrohre 13, 14 mehrteilig aufgebaut, so dass sie also aus mehreren Einzelrohren zusammengebaut sind.

Bei der in den Figuren 2 und 3 gezeigten Ausführungsform ist der Turbinenflansch 12 offen ausgestaltet, wodurch insbesondere in der Axialansicht gemäß Figur 2 die Luftspaltisolierung 21 einsehbar ist. Der Turbinenflansch 12 weist in diesem Fall eine einzige Flanschöffnung 35 auf, durch die beide Innenrohre 13, 14 hindurchgeführt sind. Somit umschließt diese gemeinsame Flanschöffnung 35 beide Innenrohre 13, 14 jeweils im Bereich der jeweiligen Austrittsöffnung 18. Dabei liegt ein nicht näher bezeichneter Innenrand der Flanschöffnung 35 in einem von der Trennwand 16 abgewandten Umfangsabschnitt flächig und dichtend an dem jeweiligen Innenrohr 13, 14 an. Im Unterschied dazu endet die Trennwand 16 in der Flanschöffnung 35 freistehend. Erkennbar besitzt die Trennwand 16 dabei zu beiden Innenrohren 13, 14 einen Abstand. Insbesondere lässt sich Figur 3 entnehmen, dass die Trennwand 16 am Turbinenflansch 12 kein axiales Hindernis besitzt und somit innerhalb der Führungskonturen 25 beweglich ist.

Im Unterschied zu den Figuren 2 und 3 zeigen die Figuren 4 und 5 eine Ausführungsform, bei welcher der Turbinenflansch 12 geschlossen ausgestaltet ist. Dementsprechend ist hier die Luftspaltisolierung 21 nicht einsehbar. Der Turbinenflansch 12 besitzt in diesem Fall zwei separate Flanschöffnungen 36, 37, durch die jeweils eines der Innenrohre 13, 14 hindurchgesteckt ist. Somit umschließt jede Flanschöffnung 36, 37 eines der beiden Innenrohre 13, 14 jeweils im Bereich der zugehörigen Austrittsöffnung 18. Dabei liegt eine nicht näher bezeichnete Innenwand der jeweiligen Flanschöffnung 36, 37 in der Umfangsrichtung jeweils geschlossen umlaufend flächig am jeweiligen Innenrohr 13, 14 an. Der Turbinenflansch 12 besitzt bei dieser Ausführungsform einen Mittelsteg 38, der sich zwischen den beiden Innenrohren 13, 14 hindurcherstreckt und der die beiden Flanschöffnungen 36, 37 voneinander trennt.

Gemäß Figur 5 ist die Trennwand 16 bei dieser Ausführungsform an einem Abstützbereich 39 des Turbinenflansches 12 abgestützt, und zwar über eine dem Turbinenflansch 12 zugewandte Stirnseite 40. Dieser Abstützbereich 39 kann zumindest ein elastisches Abstützelement 41 aufweisen, bei dem es sich insbesondere um ein Drahtgestrickelement handeln kann, das im Folgenden ebenfalls mit 41 bezeichnet wird.

Wie sich insbesondere den Figuren 2 und 6 entnehmen lässt, ist die Trennwand 16 bezüglich der Innenrohre 13, 14 freistehend angeordnet. Ferner ist die Trennwand 16 bevorzugt eben ausgestaltet, so dass sie sich in einer in Figur 6 angedeuteten Trennwandebene 42 erstreckt. Die Trennwand 16 greift zweckmäßig parallel zur Trennwandebene 42 in die Führungsaufnahmen 25, in die Positionieraufnahmen 28 und in die Halteaufnahme 32 ein. Ferner ist die Trennwand 16 in den Führungskonturen 25, in den Positionierkonturen 28 und in der Haltekontur 32 jeweils parallel zur Trennwandebene 42 beweglich angeordnet. Diese Beweglichkeit ist dabei in den Führungskonturen 25 und in der Haltekontur 32 parallel zur Abstandsrichtung 31 orientiert und in den Positionierkonturen 28 quer zur Abstandsrichtung 31 orientiert. Ferner erstreckt sich die Trennwandebene 42 im Wesentlichen senkrecht zu einer in den Figuren 3 und 5 dargestellten Flanschebene 43 des Turbinenflansches 12, in der sich der Turbinenflansch 12 erstreckt.

Schließlich ist in den Figuren 2 bis 6 eine in den Turbinenflansch 12 eingearbeitete Ringnut 44 erkennbar, in die eine Dichtung eingelegt werden kann, um die Verbindung zwischen den Turbinenflansch 12 und einem dazu komplementären Flansch der Turbine 8 abzudichten.

Wie sich insbesondere den Figuren 3 und 5 entnehmen lässt, ist bei den hier gezeigten Ausführungsformen die Positionierkontur 28 beabstandet vom Motorflansch 11 und beabstandet vom Turbinenflansch 12 positioniert, so dass sie sich nicht über den gesamten jeweiligen Seitenrand 45 der Trennwand 16 erstreckt. Dementsprechend ist an dem jeweiligen Seitenwand 45 ein davon nach außen vorstehender Vorsprung 46 ausgeformt, der den in die Positionieraufnahme 29 eingreifenden Randbereich 30 der Trennwand 16 bildet.

## Patentansprüche

1. Luftspaltisolierter Abgaskrümmer für eine aufgeladene Brennkraftmaschine (1), vorzugsweise eines Kraftfahrzeugs,
- mit einem Motorflansch (11) zum Befestigen des Abgaskrümmers (10) an einem Motorblock (2) der Brennkraftmaschine (1),
- mit einem Turbinenflansch (12) zum Befestigen des Abgaskrümmers (10) an einer Turbine (8) eines Abgasturboladers (7),
- mit zwei separaten Innenrohren (13, 14), die jeweils von wenigstens einer im Bereich des Motorflansches (11) angeordneten Eintrittsöffnung (10) für Abgas zu einer im Bereich des Turbinenflansches (12) angeordneten Austrittsöffnung (18) für Abgas führen,
- mit einem Außenrohr (15), das die beiden Innenrohre (13, 14) unter Ausbildung einer Luftspaltisolierung (21) umhüllt und sich zwischen Motorflansch (11) und Turbinenflansch (12) erstreckt,
- mit einer separaten Trennwand (16), die im Inneren (22) des Außenrohrs (15) zwei Innenräume (23, 24) voneinander trennt, in denen jeweils eines der beiden Innenrohre (13, 14) angeordnet ist,
**dadurch gekennzeichnet,**
**dass** die Trennwand (16) am Turbinenflansch (12) lose angeordnet und daran durch Führungskonturen (25) formschlüssig geführt ist.

2. Abgaskrümmer nach Anspruch 1,
**dadurch gekennzeichnet,**
**dass** die jeweilige Führungskontur (25) durch eine im Turbinenflansch (12) ausgebildete Führungsaufnahme (26) gebildet ist, in die ein seitlicher Randbereich (27) der Trennwand (16) formschlüssig eingreift.

3. Abgaskrümmer nach Anspruch 1 oder 2,
**dadurch gekennzeichnet,**
**dass** die Trennwand (16) am Außenrohr (15) in Positionierkonturen (28) formschlüssig positioniert ist.

4. Abgaskrümmer nach Anspruch 3,
**dadurch gekennzeichnet,**
**dass** die jeweilige Positionierkontur (28) durch eine im Außenrohr (15) ausgebildete Positionieraufnahme (29) gebildet ist, in die ein seitlicher Randbereich (30) der Trennwand (16) formschlüssig eingreift.

5. Abgaskrümmer nach einem der Ansprüche 1 bis 4,
**dadurch gekennzeichnet,**
**dass** die Trennwand (16) am Motorflansch (11) in wenigstens einer Haltekontur (32) formschlüssig gehalten ist.

6. Abgaskrümmer nach Anspruch 5,
**dadurch gekennzeichnet,**
**dass** die jeweilige Haltekontur (32) durch eine im Motorflansch (11) ausgebildete Halteaufnahme (33) gebildet ist, in die ein stirnseitiger Randbereich (34) der Trennwand (16) formschlüssig eingreift.

7. Abgaskrümmer nach einem der Ansprüche 1 bis 6,
**dadurch gekennzeichnet,**
**dass** der Turbinenflansch (12) eine einzige Flanschöffnung (35) aufweist, welche die beiden Innenrohre (13, 14) im Bereich der jeweiligen Austrittsöffnung (18) umschließt und in der die Trennwand (16) stirnseitig freistehend endet.

8. Abgaskrümmer nach einem der Ansprüche 1 bis 6,
**dadurch gekennzeichnet,**
- **dass** der Turbinenflansch (12) zwei separate Flanschöffnungen (36, 37) aufweist, die jeweils eines der Innenrohre (13, 14) im Bereich der jeweiligen Austrittsöffnung (18) umschließen,
- **dass** die Trennwand (16) an einem Abstützbereich (39) des Turbinenflansches (12) stirnseitig abgestützt ist.

9. Abgaskrümmer nach Anspruch 8,
**dadurch gekennzeichnet,**
**dass** der Abstützbereich (39) wenigstens ein elastisches Abstützelement (41) aufweist, über das die Trennwand (16) stirnseitig am Turbinenflansch (12) abgestützt ist.

10. Abgaskrümmer nach Anspruch 9,
**dadurch gekennzeichnet,**
**dass** das jeweilige Abstützelement durch ein Drahtgestrickelement (41 ) gebildet ist.

11. Abgaskrümmer nach einem der Ansprüche 1 bis 10,
**dadurch gekennzeichnet,**
**dass** die Trennwand (16) bezüglich der Innenrohre (13, 14) freistehend angeordnet ist.

12. Abgaskrümmer nach einem der Ansprüche 1 bis 11,
**dadurch gekennzeichnet,**
**dass** die Trennwand (16) eben ausgestaltet ist und sich in einer Trennwandebene (42) erstreckt.

13. Abgaskrümmer nach den Ansprüchen 2 und 12,
**dadurch gekennzeichnet,**
**dass** die Trennwand (16) parallel zur Trennwandebene (42) in die jeweilige Führungsaufnahme (26) eingreift.

14. Abgaskrümmer nach Anspruch 12 oder 13,
**dadurch gekennzeichnet,**
**dass** die Trennwand (16) in der jeweiligen Führungskontur (25) parallel zur Trennwandebene (42) beweglich angeordnet ist.

15. Abgasanlage für eine aufgeladene Brennkraftmaschine (1), insbesondere eines Kraftfahrzeugs, mit einer Turbine (8) eines Abgasturboladers (7) und mit einem Abgaskrümmer (10) nach einem der Ansprüche 1 bis 14 zum Verbinden eines Motorblocks (2) der Brennkraftmaschine (1) mit der Turbine (8).

## Claims

1. An air gap insulated exhaust manifold for a supercharged internal combustion engine (1), preferentially of a motor vehicle,
- with an engine flange (11) for fastening the exhaust manifold (10) to an engine block (2) of the internal combustion engine (1),
- with a turbine flange (12) for fastening the exhaust manifold (10) to a turbine (8) of an exhaust gas turbocharger (7),
- with two separate inner pipes (13, 14), which each lead from at least one inlet opening (10) for exhaust gas arranged in the region of the engine flange (11) to an outlet opening (18) for exhaust gas arranged in the region of the turbine flange (12),
- with an outer pipe (15), which envelopes the two inner pipes (13, 14) subject to forming an air gap insulation (21) and extends between engine flange (11) and turbine flange (12),
- with a separate separating wall (16), which in the interior (22) of the outer pipe (15) separates two inner spaces (23, 24) from one another, in which one of the two inner pipes (13, 14) each is arranged,
**characterized in**
**that** the separating wall (16) is loosely arranged on the turbine flange (12) and
is guided thereon through guide contours (25) in a form-fit manner.

2. The exhaust manifold according to claim 1,
**characterized in**
**that** the respective guide contour (25) is formed through a guide slot (26) formed in the turbine flange (12), in which a lateral edge region (27) of the separating wall (16) engages in a form-fit manner.

3. The exhaust manifold according to claims 1 to 2,
**characterized in**
**that** the separating wall (16) is positioned on the outer pipe (15) in positioning contours (28) in a form-fit manner.

4. The exhaust manifold according to claim 3,
**characterized in**
**that** the respective positioning contour (28) is formed through a positioning slot (29) formed in the outer pipe (15), in which a lateral edge region (30) of the separating wall (16) engages in a form-fit manner.

5. The exhaust manifold according to any one of the claims 1 to 4, **characterized in**
**that** the separating wall (16) is held on the engine flange (11) in at least one retaining contour (32) in a form-fit manner.

6. The exhaust manifold according to claim 5,
**characterized in**
**that** the respective retaining contour (32) is formed through a retaining slot (33) formed in the engine flange (11), in which a face end edge region (34) of the separating wall (16) engages in a form-fit manner.

7. The exhaust manifold according to any one of the claims 1 to 76,
**characterized in**
**that** the turbine flange (12) comprises a single flange opening (35), which encloses the two inner pipes (13, 14) in the region of the respective outlet opening (18) and in which the separating wall (16) terminates at the face end in a freestanding manner.

8. The exhaust manifold according to any one the claims 1 to 6,
**characterized in**
- **that** the turbine flange (12) comprises two separate flange openings (36, 37), which each enclose one of the inner pipes (13, 14) in the region of the respective outlet opening (18),
- **that** the separating wall (16) is supported on a support region (39) of the turbine flange (12) on the face end.

9. The exhaust manifold according to claim 8,
**characterized in**
**that** the support region (39) comprises at least one elastic support element (41), via which the separating wall (16) at the face end is supported on the turbine flange (12).

10. The exhaust manifold according to claim 9,
**characterized in**
**that** the respective support element is formed by a knit wire mesh element (41).

11. The exhaust manifold according to any one of the claims 1 to 10,
**characterized in**
**that** the separating wall (16) with respect to the inner pipes (13, 14) is arranged in a freestanding manner.

12. The exhaust manifold according to any one of the claims 1 to 11,
**characterized in**
**that** the separating wall (16) is configured flat and extends in a separating wall plane (42).

13. The exhaust manifold according to claims 2 and 12,
**characterized in**
**that** the separating wall (16) engages in the respective guide slot (26) parallel to the separating wall plane (42).

14. The exhaust manifold according to claim 12 or 13,
**characterized in**
**that** the separating wall (16) is moveably arranged in the respective guide contour (25) parallel to the separating wall plane (42), and/or

15. An exhaust system for a supercharged internal combustion engine (1), in particular of a motor vehicle, with a turbine (8) of an exhaust gas turbocharger (7) and with an exhaust manifold (10) according to any one of the claims 1 to 14 for connecting an engine block (2) of the internal combustion engine (1) to the turbine (8).

## Revendications

1. Collecteur de gaz d'échappement isolé par interstice d'air pour un moteur à combustion interne (1) suralimenté, de préférence d'un véhicule automobile,
- avec une bride de moteur (11) pour la fixation du collecteur de gaz d'échappement (10) sur un bloc-moteur (2) du moteur à combustion interne (1),
- avec une bride de turbine (12) pour la fixation du collecteur de gaz d'échappement (10) sur une turbine (8) d'un turbocompresseur de gaz d'échappement (7),
- avec deux tubes internes (13, 14) séparés qui cheminent respectivement depuis au moins une ouverture d'entrée (10) pour le gaz d'échappement, disposée dans la zone de la bride de moteur (11), jusqu'à une ouverture de sortie (18) pour le gaz d'échappement, disposée dans la zone de la bride de turbine (12),
- avec un tube externe (15) qui entoure les deux tubes internes (13, 14) en formant une isolation par interstice d'air (21) et s'étend entre la bride de moteur (11) et la bride de turbine (12),
- avec une paroi de séparation (16) séparée qui sépare l'un de l'autre, à l'intérieur (22) du tube externe (15), deux espaces internes (23, 24) dans lesquels est disposé respectivement l'un des deux tubes internes (13, 14),
**caractérisé en ce**
**que** la paroi de séparation (16) est disposée sur la bride de turbine (12) de façon lâche et est guidée contre celle-ci par des contours de guidage (25) par coopération de formes.

2. Collecteur de gaz d'échappement selon la revendication 1,
**caractérisé en ce**
**que** le contour de guidage (25) respectif est formé par un logement de guidage (26) réalisé dans la bride de turbine (12) avec lequel une zone périphérique latérale (27) de la paroi de séparation (16) vient en prise par coopération de formes.

3. Collecteur de gaz d'échappement selon la revendication 1 ou 2,
**caractérisé en ce**
**que** la paroi de séparation (16) est placée dans des contours de positionnement (28) sur le tube externe (15) par coopération de formes.

4. Collecteur de gaz d'échappement selon la revendication 3,
**caractérisé en ce**
**que** le contour de positionnement (28) respectif est formé par un logement de positionnement (29), réalisé sur le tube externe (15), avec lequel une zone périphérique latérale (30) de la paroi de séparation (16) vient en prise par coopération de formes.

5. Collecteur de gaz d'échappement selon l'une des revendications 1 à 4,
**caractérisé en ce**
**que** la paroi de séparation (16) est maintenue dans au moins un contour de support (32) sur la bride de moteur (11) par coopération de formes.

6. Collecteur de gaz d'échappement selon la revendication 5,
**caractérisé en ce**
**que** le contour de support (32) respectif est formé par un logement de support (33) réalisé dans la bride de moteur (11) avec lequel une zone périphérique frontale (34) de la paroi de séparation (16) vient en prise par coopération de formes.

7. Collecteur de gaz d'échappement selon l'une des revendications 1 à 6,
**caractérisé en ce**
**que** la bride de turbine (12) présente une unique ouverture de bride (35) qui entoure les deux tubes internes (13, 14) dans la zone de l'ouverture de sortie (18) respective et dans laquelle la paroi de séparation (16) se termine librement du côté frontal.

8. Collecteur de gaz d'échappement selon l'une des revendications 1 à 6,
**caractérisé en ce**
- **que** la bride de turbine (12) présente deux ouvertures de bride (36, 37) séparées qui entourent respectivement l'un des tubes internes (13, 14) dans la zone de l'ouverture de sortie (18) respective,
- **que** la paroi de séparation (16) est appuyée sur une zone d'appui (39) de la bride de turbine (12) du côté frontal.

9. Collecteur de gaz d'échappement selon la revendication 8,
**caractérisé en ce**
**que** la zone d'appui (39) présente au moins un élément d'appui élastique (41) par le biais duquel la paroi de séparation (16) est appuyée contre la bride de turbine (12) du côté frontal.

10. Collecteur de gaz d'échappement selon la revendication 9,
**caractérisé en ce**
**que** l'élément d'appui respectif est formé par un élément de tricot de fils (41).

11. Collecteur de gaz d'échappement selon l'une des revendications 1 à 10,
**caractérisé en ce**
**que** la paroi de séparation (16) est disposée librement par rapport aux tubes internes (13, 14).

12. Collecteur de gaz d'échappement selon l'une des revendications 1 à 11,
**caractérisé en ce**
**que** la paroi de séparation (16) est de configuration plane et s'étend dans un plan de paroi de séparation (42).

13. Collecteur de gaz d'échappement selon les revendications 2 et 12,
**caractérisé en ce**
**que** la paroi de séparation (16) vient en prise avec le logement de guidage (26) respectif parallèlement au plan de paroi de séparation (42).

14. Collecteur de gaz d'échappement selon la revendication 12 ou 13,
**caractérisé en ce**
**que** la paroi de séparation (16) est disposée mobile dans le contour de guidage (25) respectif parallèlement au plan de la paroi de séparation (42).

15. Installation de gaz d'échappement pour un moteur à combustion interne (1) suralimenté, en particulier d'un véhicule automobile, avec une turbine (8) d'un turbocompresseur de gaz d'échappement (7) et avec un collecteur de gaz d'échappement (10) selon l'une des revendications 1 à 14 pour relier un bloc-moteur (2) du moteur à combustion interne (1) à la turbine (8).
